# EUROPEAN PATENT SPECIFICATION

(11) **EP 2 650 216 B1**
(45) Date of publication and mention of the grant of the patent: **13.08.2014**
(21) Application number: 12164168.2
(22) Date of filing: 13.04.2012
(51) Int. Cl.: B64D 11/00, B64D 11/04

(54) **Cooling arrangement**
Kühlanordnung
Agencement de refroidissement

(43) Date of publication of application: 16.10.2013
(73) Proprietor: Airbus Operations GmbH, 21129 Hamburg (DE)
(72) Inventor: Trümper, Torsten, 21129 Hamburg (DE); Schult, Jens, 21129 Hamburg (DE)
(74) Representative: Schicker, Silvia

(56) References cited:
- EP-A2- 2 251 260
- DE-A1- 19 952 523
- US-A- 4 969 509

## Description

The invention relates to a cooling arrangement suitable for use in an aircraft to cool, for example, trolleys containing food to be supplied to the aircraft passengers and to a method of operating a cooling arrangement of this kind.

At present, in modern passenger aircraft, meals and beverages to be supplied to the aircraft passengers during flight are stored in trolleys in the region of galleys until they are delivered to the aircraft passengers by the cabin crew. It is known, for example, from DE 41 05 034 A1, to cool trolleys placed in the region of the galleys of the aircraft and used to store food to be kept cool with the aid of autonomous cooling devices which work with cold air as the cooling medium and are each equipped with their own compression refrigerating machine (air chiller). Alternatively to this, DE19952523,

DE 43 40 317 C2, DE 10 2006 005 035 B3, WO 2007/080012 A1, DE 10 2009 011 797 A1 and US 2010/0251797 A1, for example, describe central cooling systems with a central compression refrigerating machine whose refrigerating capacity is distributed via a cooling circuit to a plurality of cooling stations arranged in the region of the aircraft galleys. The cooling stations supplied with cooling energy by the central refrigerating machine release this cooling energy to trolleys placed in the region of the galleys of the aircraft and used to store food which is to be kept cool, via cooling air circuits which are thermally coupled to the cooling circuit via corresponding heat exchangers.

Irrespective of whether the cooling energy required for cooling the food to be kept cool is provided by an autonomously working air chiller or a central cooling system of the aircraft, two different systems for supplying cooling air to the food to be cooled may be used, which are described, for example, in DE 10 2010 031 909 A1 and WO 2012/025200 A1. So-called air-over systems comprise a heat-insulated cooling chamber sealed against leakages, through which flows cooling air provided by the air chiller or the central cooling system. The trolleys loaded with the food to be cooled can be pushed into the cooling chamber. Trolleys suitable for use in an air-over system are not insulated themselves, but rather have air openings which allow unhindered circulation of cooling air from the cooling chamber through the trolleys and consequently over the food held in the trolleys which is to be cooled. By contrast, in so-called air-through systems, the trolleys are connected to the air chiller or a cooling station of the central cooling system via corresponding cooling air connections provided on the trolleys, so that the cooling air provided by the air chiller or the central cooling system can be passed directly through the trolleys. To avoid losses of cooling energy, trolleys provided for use in an air-through system must be provided with heat insulation and be sealed against leakages.

Air-through systems allow a direct supply of cooling air to the goods to be cooled and thus a particularly efficient utilization of the cooling energy provided by the autonomously working air chiller or the central cooling system. However, the outer surfaces of a trolley, which is cooled by means of an air-through cooling system, have a temperature which is significantly lower than the temperature of the ambient air outside of a compartment accommodating the trolley. Further, surfaces such as, for example, inner wall surfaces within the compartment accommodating the trolley, due to cooling energy transfer from the cool outer surfaces of the trolley, are also cooled to a temperature which is significantly lower than the temperature of the ambient air outside of the compartment. When the compartment is opened, for example to withdraw a trolley from the compartment, relatively warm humid ambient air enters the compartment. In addition, ambient air may enter the compartment through more or less inevitable leakages. The humidity contained in the ambient air condenses at the cold surfaces within the compartment and accumulates in the floor region of the compartment. To be able to remove the condensate from the compartment, a drainage system is provided which comprises a drain integrated into the floor of the compartment and a drain line system for discharging the condensate entering the drain from the compartment to the bilge of the aircraft.

The invention is directed to the object to provide a cooling arrangement suitable for use in an aircraft to cool, for example, trolleys containing food to be supplied to the aircraft passengers which is lightweight, easy to design and easy to install. Furthermore, the invention is directed to the object to specify a method of operating a cooling arrangement of this kind.

This object is achieved by a cooling arrangement having the features of Claim 1 and by a method of operating a cooling arrangement having the features of Claim 8.

A cooling arrangement according to the invention which is suitable for use in an aircraft, for example, to cool food to be supplied to the aircraft passengers, but also for other purposes comprises a cooling energy consumer. The cooling energy consumer has a housing which is provided with a cooling fluid inlet for supplying a cooling fluid to the housing and a cooling fluid outlet for discharging the cooling fluid from the housing. The cooling energy consumer may, for example, be a trolley which is loaded with beverages and food to be supplied to the aircraft passengers. The cooling fluid supplied to the housing of the cooling energy consumer preferably is ambient air which, prior to being supplied to the cooling energy consumer, is cooled upon flowing through a heat exchanger which is supplied with cooling energy from an autonomously working air chiller or a central cooling system of the aircraft. For example, a refrigerant which is cooled to a temperature of approximately -9°C by means of an autonomously working air chiller or a central refrigerating machine of a central cooling system may be guided through the heat exchanger so as to cool the cooling fluid to be supplied to the cooling energy consumer.

Specifically in case the cooling energy consumer is a trolley loaded with food to be cooled, the cooling fluid preferably is guided through the housing of the cooling energy consumer such that the cooling energy of the cooling fluid is evenly released to the goods to be cooled. This may for example be achieved by supplying the cooling fluid to the housing of the cooling energy consumer through a cooling fluid inlet which is disposed in an upper portion of a rear wall of the cooling energy consumer housing, guiding the cooling fluid substantially downwards through the cooling energy consumer housing and finally discharging the cooling fluid from the cooling energy consumer housing through a cooling fluid outlet which is provided in a lower region of the rear wall of the cooling energy consumer housing. Of course, also other designs of the flow path of the cooling fluid into and through the housing of the cooling energy consumer are conceivable. Preferably, a conveying device which might, for example, be designed as a fan or blower is provided so as to convey the cooling fluid into the cooling energy consumer housing via the cooling fluid inlet and to discharge the cooling fluid from the cooling energy consumer housing after releasing its cooling energy through the cooling fluid outlet.

The cooling energy consumer is received within a compartment. The compartment may for example be a compartment of an aircraft galley and preferably is provided with a door through which the cooling energy consumer may be inserted into the compartment or withdrawn from the compartment. Preferably, the compartment is sealed against the ambient, for example, by means of a sealing system described in DE 10 2010 031 909 A1 and WO 2012/025200 A1. The compartment may be adapted to receive only a single cooling energy consumer. Preferably, however, the compartment is designed to accommodate a plurality of cooling energy consumers, in particular in the form of trolleys loaded with food to be cooled.

When cooling fluid is supplied to the cooling energy consumer, the surfaces of the cooling energy housing inevitably are cooled to a temperature below the temperature of the ambient air outside the compartment. Preferably, the supply of cooling energy to the cooling energy consumer, by suitably controlling the volume flow and the temperature of the cooling fluid supplied to the cooling energy consumer housing, is controlled such that the outer surfaces of the cooling energy consumer housing are cooled to a temperature of approximately 4°C.

In the cooling arrangement according to the invention, the compartment receiving the cooling energy consumer is provided with a cooling air inlet for supplying cooling air to the compartment and a cooling air outlet for discharging the cooling air from the compartment. The cooling air supplied to the compartment preferably is ambient air which, prior to being supplied to the compartment, is cooled upon flowing through a heat exchanger which is supplied with cooling energy from an autonomously working air chiller or a central cooling system of the aircraft. Upon flowing through the heat exchanger the cooling air preferably is cooled to a temperature below a dew point temperature within the compartment. Thus, the cooling air supplied to a compartment is very dry and has a humidity content which is significantly lower than the humidity content of the ambient air outside the compartment.

Typically, the humidity content of the cooling air is reduced to the desired extent by simply cooling the cooling air to the desired temperature, for example in heat exchanger which is supplied with cooling energy from an autonomously working air chiller or a central cooling system of the aircraft. If desired, it is, however, also conceivable to further dry the cooling air prior to being supplied to the compartment, for example by passing the cooling air through a dehumidifier.

After being guided through the compartment, for example over the outer surfaces of the cooling energy consumer, the cooling air may be discharged from the compartment through the cooling air outlet. Preferably, a suitable conveying device which may, for example, be designed in the form of a blower or a fan may be used to convey the cooling air to the compartment via the cooling air inlet and to discharge the cooling air from the compartment via the cooling air outlet. In the cooling arrangement according to the invention, the air-through principle employed for cooling the cooling energy consumer thus is combined with an air-over system which allows the supply of additional cooling air to the compartment receiving the cooling energy consumer.

In the event of a leakage of the compartment which leads to an unintended supply of warm humid ambient air into the interior of the compartment, in the cooling arrangement according to the invention the warm humid ambient air is mixed with the cold dry cooling air supplied to the compartment via the cooling air inlet. As a result, condensation of humidity contained in the ambient air at cold surfaces within the compartment, for example the outer surfaces of the cooling energy consumer housing, may be considerably reduced or even avoided. In case the compartment is opened, for example to withdraw the cooling energy consumer from the compartment, a large volume flow of ambient air enters the compartment. Although in this case condensation of humidity contained in the ambient air at cold surfaces within the compartment may not entirely be avoided, after reclosing the compartment the humidity introduced into the compartment may again be removed from the compartment by the cooling air flow circulating through the compartment. As a result, a drainage system for removing condensate from the compartment can be dispensed with. The cooling arrangement according to the invention thus is particularly lightweight, easy to design and easy to install.

In a preferred embodiment the cooling arrangement comprises a control unit, in particular an electronic control unit, for controlling the supply of cooling energy to the housing of the cooling energy consumer and the compartment. For example, the control unit may be adapted to control a conveying device or conveying devices for conveying the cooling fluid through the cooling energy consumer housing and for conveying the cooling air through the compartment. Specifically, the control unit preferably is adapted to control the supply of cooling energy to the housing of the cooling energy consumer and the compartment such that, in the event of an unintended leakage of the compartment, the dew point temperature of the air within the compartment is maintained below the surface temperature within the compartment, i.e. the temperature of the exposed surfaces within the compartment. As a result, condensation of the humidity contained in the ambient air which enters the compartment due to an unintended leakage of the compartment at the cold surfaces within the compartment can be avoided.

For example, the control unit may be adapted to control the supply of cooling fluid to the housing of the cooling energy consumer such that the temperature of the outer surfaces of the cooling energy consumer housing is approximately 4°C. Due to cooling energy transfer from the cooling energy consumer housing further exposed surfaces within the compartment such as, for example, inner surfaces of the compartment walls, are also cooled to a temperature of approximately 4°C. The control unit then may control the supply of cooling air to the compartment such that the dew point temperature of the mixture of air prevailing in the compartment, warm humid air entering the compartment via the unintended leakage of the compartment and cooling air supplied to the compartment is maintained below 4°C. Specifically, the control unit may be adapted to control the temperature and/or the volume flow of the cooling air supplied to the compartment.
Preferably, the control unit is adapted to control the supply of cooling energy to the housing of the cooling energy consumer and the compartment based on the assumption that an unintended leakage of the compartment leads to a volume flow of 2 to 20 I/s of ambient air from outside the compartment to enter the compartment. The leakage air volume flow, of course, depends on the quality of a sealing system employed to seal the compartments against the ambient. A volume flow range of 2 to 20 I/s, however, covers a broad range of typical leakage events that may occur during normal operation of the cooling arrangement.

The control unit may further be adapted to control a volume flow, a speed and/or a direction of flow of cooling air supplied to the compartment such that the cooling air is substantially evenly mixed with the air prevailing in the compartment and/or leakage air entering the compartment via an unintended leackage of the compartment. Specifically, the volume flow, the speed and/or the direction of flow of cooling air supplied to the compartment may be controlled such that the formation of air swirls within the compartment may ensure a sufficient mixing of the cooling air with the air prevailing in the compartment and/or leakage air entering the compartment via an unintended leackage of the compartment such that consensation of humidity contained in the leakage air is prevented.

Basically, the cooling energy consumer may be supplied with a cooling fluid, i.e. a liquid or a gaseous coolant, which is provided to the cooling energy consumer housing by an independent cooling fluid source. In a preferred embodiment of the cooling arrangement according to the invention, the cooling energy consumer housing and the compartment, however, are supplied with cooling air from a common cooling air source. In particular, the cooling energy consumer housing and the compartment may be supplied with cooling air which is cooled upon flowing through a heat exchanger supplied with cooling energy from an autonomously working air chiller or a central refrigerating machine of a central cooling system.

The cooling energy consumer housing and the compartment then are supplied with cooling air having the same temperature. The control unit then may control the supply of cooling energy to the housing of the cooling energy consumer and the compartment such that, in the event of an unintended leakage of the compartment, the dew point temperature of the air within the compartment is maintained below the surface temperature within the compartment, by simply controlling the volume flow of cooling air from the common cooling air source to the cooling energy consumer housing and the compartment. Typically, in practice the volume flow of cooling air which has to be supplied to the compartment so as to maintain the dew point temperature of the air within the compartment below the surface temperature within the compartment in the event of an unintended leakage of the compartment is low enough so as to still ensure proper cooling of the cooling energy consumer.

The cooling air inlet for supplying cooling air to the compartment may be provided in a cooling air supply manifold which is connected to the cooling fluid inlet of the cooling energy consumer housing. The cooling air supply manifold then serves as a common manifold for supplying cooling air to both the cooling energy consumer housing and the compartment. Preferably the cooling air inlet is provided at a position such that the cooling air is supplied to a compartment region between the cooling energy consumers received within the compartment. Any desired number of cooling air inlets may be provided. For example, several cooling air inlets may supply cooling air to compartment regions between the cooling energy consumers received within in the compartment. (An) additional cooling air inlet(s) may be disposed at a position with allow the supply of cooling air to the compartment in such a way that the cooling air flows over upper surfaces of the cooling energy consumers. A flow cross sectional area of the cooling air inlet(s) may, for example, be 2 cm².

Additionally or alternatively thereto, the cooling air outlet for discharging cooling air from the compartment may be provided in a cooling air discharge manifold which is connected to the cooling fluid outlet of the cooling energy consumer housing. The cooling air discharge manifold then serves as a common manifold for discharging cooling air from both the cooling energy consumer housing and the compartment. Preferably the cooling air outlet is provided at a position such that the cooling air is discharged from a compartment region between the cooling energy consumers received within the compartment. Any desired number of cooling air outlets may be provided. For example, several cooling air outlets may supply cooling air to compartment regions between the cooling energy consumers received within in the compartment. Basically, separate conveying devices may be provided for supplying cooling fluid to the cooling energy consumer housing and for supplying cooling air to the compartment. When separate conveying devices are employed for supplying a cooling fluid to the cooling energy consumer housing and for supplying cooling air to the compartment, the cooling fluid flow to the cooling energy consumer housing and the cooling air flow to the compartment may be controlled by appropriately controlling the speed of the conveying devices. In particular in a cooling arrangement wherein the cooling energy consumer housing and the compartment are supplied with cooling air from a common cooling air source it is, however, also conceivable to employ only a single conveying device for supplying cooling air to both the cooling energy consumer housing and the compartment.

In case a common conveying device is used for supplying cooling air to both the cooling energy consumer housing and the compartment, the flow of cooling air to the cooling energy consumer housing and the compartment preferably is controlled by means of suitable valves. For example, the flow of cooling air into the compartment may be controlled by providing the cooling air inlet of the compartment with a valve having a variable slow cross section. Similarly, the flow of cooling air into the cooling energy consumer housing may be controlled by providing the cooling fluid inlet of the housing or a cooling fluid supply opening connected to the cooling fluid inlet of the housing with a valve having a variable slow cross section

In a method, according to the invention, of operating a cooling arrangement suitable for use in an aircraft, a cooling fluid is supplied to a housing of a cooling energy consumer via a cooling fluid inlet of the housing. The cooling fluid is discharged from the housing of the cooling energy consumer via a cooling fluid outlet of the housing. In addition, cooling air is supplied to a compartment receiving the cooling energy consumer via a cooling air inlet of the compartment. Cooling air is discharged from the compartment via a cooling air outlet of the compartment.

Preferably, a control unit controls the supply of cooling energy to the housing of the cooling energy consumer and the compartment such that, in the event of an unintended leakage of the compartment, the dew point temperature of the air within the compartment is maintained below the surface temperature within the compartment.

The control unit may control the supply of cooling energy to the housing of the cooling energy consumer and the compartment based on the assumption that an unintended leakage of the compartment leads to a volume flow of 2 to 20 I/s of ambient air from outside the compartment to enter the compartment.

The control unit may control a volume flow, a speed and/or a direction of flow of cooling air supplied to the compartment such that the cooling air is substantially evenly mixed with the air prevailing in the compartment and/or leakage air entering the compartment via an unintended leackage of the compartment.

The cooling energy consumer housing and the compartment may be supplied with cooling air from a common cooling air source.

Preferably, the cooling air inlet for supplying cooling air to the compartment is provided in a cooling air supply manifold which is connected to the cooling fluid inlet of the cooling energy consumer housing.

Alternatively or additionally thereto, the cooling air outlet for discharging cooling air from the compartment may be provided in a cooling air discharge manifold which is connected to the cooling fluid outlet of the cooling energy consumer housing.

The above described cooling arrangement and/or the above described method of operating a cooling arrangement may be used on board an aircraft, in particular for cooling food to be supplied to the aircraft passengers.

A preferred embodiment of the invention will now be explained in more detail with reference to the appended schematic drawings, of which
- Figure 1: shows a cooling arrangement suitable for use on board an aircraft for cooling food to be supplied to the aircraft passengers, and
- Figure 2: shows the operating principle of the cooling arrangement according to Figure 1 in a Mollier h,x-diagram.

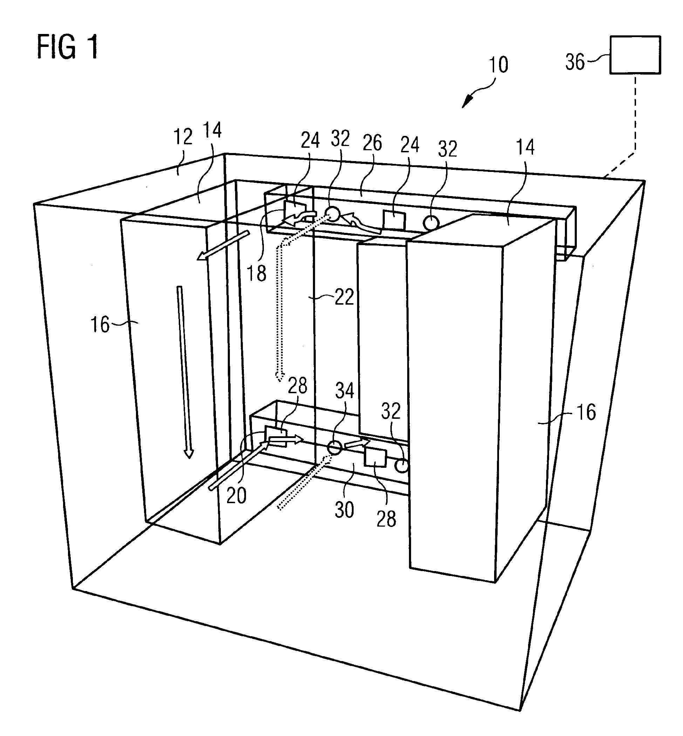

Fig. 1 shows a cooling arrangement 10 to be installed in an aircraft in the region of an aircraft galley. The cooling arrangement 10 comprises a compartment 12 which is provided with a door (not shown in Figure 1) and which is sealed against the ambient by means of a suitable sealing system (also not shown in Figure 1). The compartment is suitable to receive three cooling energy consumers 14 in the form of mobile trolleys loaded with food to be supplied to the aircraft passengers. In Figure 1 two cooling energy consumer 14 are shown.

Each cooling energy consumer 14 comprises a housing 16 which is provided with a cooling fluid inlet 18 and a cooling fluid outlet 20. The cooling fluid inlet 18 is formed in an upper region of a rear wall 22 of the cooling energy consumer housing 16, whereas the cooling fluid outlet 20 is formed in a lower region of the rear wall 22 of the cooling energy consumer housing 16. The cooling fluid inlet 18 is connected to a corresponding cooling air supply opening 24 provided in a cooling air supply manifold 26. Similarly, the cooling fluid outlet 20 is connected to a corresponding cooling air discharge opening 28 provided in a cooling air discharge manifold 30.

The cooling air supply manifold 26 is flown through with cooling air which, prior to being fed to the cooling air supply manifold 26, is cooled in a heat exchanger (not shown in Figure 1) by cooling energy transfer from a refrigerant. The refrigerant, by means of an autonomously operating air chiller or a central cooling system, is cooled to a temperature of approximately -9°C. As becomes apparent from Figure 1, the cooling air is guided through the cooling energy consumer 12 and, after releasing its cooling energy to the cooling energy consumer 12, exits the cooling energy consumer 12 via the cooling fluid outlet 20. Finally, the cooling air is discharged from the cooling energy consumer 12 via the cooling air discharge manifold 30. A conveying device in the form of a blower or fan (not shown in Figure 1) conveys the cooling air through the cooling air supply manifold 26, the cooling energy consumer 12 and the cooling air discharge manifold 30.

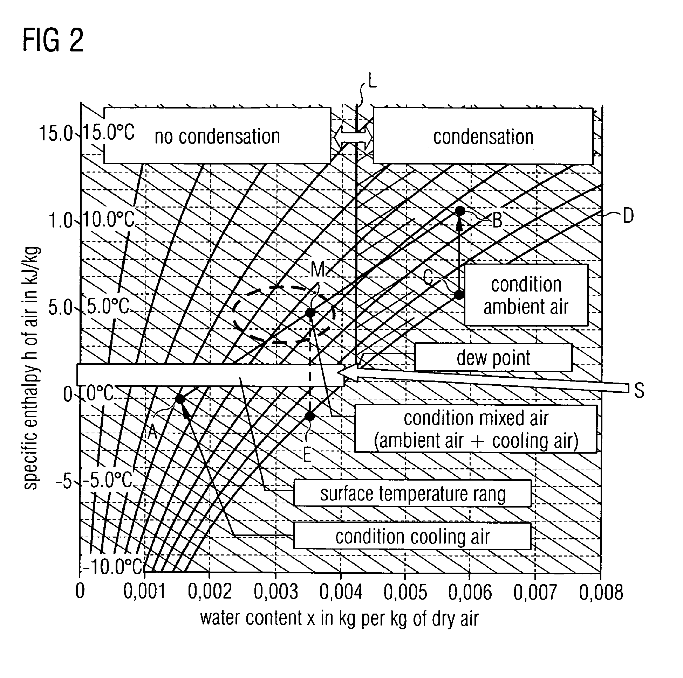

The cooling air supplied to the cooling energy consumer 12 via the cooling air supply manifold 26 has a temperature of slightly below 0°C and a low humidity, see point A in the Mollier h,x diagram of Figure 2. As a result, an outer surface of the cooling energy consumer housing 16 is cooled to approximately 4°C. In addition, also the other exposed surfaces within the compartment 12 such as, for example, the inner surfaces of the compartment walls are also cooled to a temperature of approximately 4°C. The surface temperature range within the compartment in the Mollier h,x diagram of Figure 2 is illustrated by the area S. The dew point line is marked with D. As becomes apparent from the diagram, ambient air in a temperature and humidity condition on the left hand side of line L, will not cause condensation at the surfaces within the compartment 12. If, however, ambient air in a temperature and humidity condition on the right hand side of line L enters the compartment 12, condensation inevitably will occur.

Point B in the diagram of Figure 2 illustrates an example of the thermodynamic condition of ambient air outside the compartment 12. The dew point for this ambient air is represented by point C. Hence, in the event of ambient air entering the compartment 12, for example, due to inevitable leakages of the compartment 12, humidity contained in the ambient air condenses at the cold surfaces within the compartment 12.

In the cooling arrangement 10 the compartment 12 therefore is provided with a cooling air inlet 32 which serves to supply cooling air into the interior of the compartment 12. The cooling air inlet 32 is provided in the cooling air supply manifold 26. As a result, the interior of the compartment 12 is supplied with the same cooling air which also is supplied directly to the housings 16 of the cooling energy consumers 14. The cooling air, after being circulated through the interior of the compartment 12, is discharged from the compartment 12 via a cooling air outlet 34 which is provided in the cooling air discharge manifold 30. It is thus possible to use a single conveying device for circulating cooling air through both, the cooling energy consumer housings 16 and the interior of the compartment 12. The cooling arrangement 10 thus is operated according to a combined air-through and air-over principle.

A control unit 36 controls the supply of cooling air and thus cooling energy to the housings 16 of the cooling energy consumers 14 and the compartment 12 such that, in the event of an unintended leakage of the compartment 12, the dew point temperature of the air within the compartment 12 is maintained below the surface temperature within the compartments 12. Specifically, the control unit 36 controls the supply of cooling air and thus cooling energy to the housings 16 of the cooling energy consumers 14 and the compartment 12 based on the assumption that an unintended leakage of the compartment 12 leads to a volume flow of 2 to 20 I/s of ambient air in the thermodynamic condition represented by point B in Figure 2 from outside the compartment 12 to enter the compartment 12.

The thermodynamic condition of the mixture of air prevailing in the compartment 12, ambient air entering the compartment 12 due to an unintended leakage and cooling air supplied to the interior of the compartment 12 via the cooling air inlet 32 in the diagram of Figure 2 is represented by point M. As becomes apparent from the diagram, the dew point of this air mixture is below the surface temperature of the exposed surfaces within the compartment 12. As a result, condensation at the exposed surfaces within the compartment can reliably be prevented.

In case the door of the compartment 12 is opened, for example for withdrawing one of the cooling energy consumers 14 from the compartment 12, the volume flow of ambient air into the compartment 12 is too large to be compensated for by supplying cold cooling air into the interior of the compartment 12. Hence, condensation at the exposed surfaces within the compartment 12 cannot entirely be prevented. However, after reclosing the compartment door, the humidity introduced into the compartment 12 is removed from the compartment 12 by the cooling air flow circulating through the compartment 12 and wet exposed surfaces within the compartment 12 are dried.

## Claims

1. Cooling arrangement (10) suitable for use in an aircraft, the cooling arrangement (10) comprising:
- a cooling energy consumer (14) having a housing (16) which is provided with a cooling fluid inlet (18) for supplying a cooling fluid to the housing (16) and a cooling fluid outlet (20) for discharging the cooling fluid from the housing (16), the cooling energy consumer (14) being received within a compartment (12),
**characterized in that** the compartment (12) is provided with a cooling air inlet (32) for supplying cooling air to the compartment (12) and a cooling air outlet (34) for discharging the cooling air from the compartment (12).

2. Arrangement according to Claim 1,
**characterized by** a control unit (36) which is adapted to control the supply of cooling energy to the housing (16) of the cooling energy consumer (14) and the compartment (12) such that, in the event of an unintended leackage of the compartment (12), the dew point temperature of the air within the compartment (12) is maintained below the surface temperature within the compartment (12).

3. Arrangement according to Claim 2,
**characterized in that** the control unit (36) is adapted to control the supply of cooling energy to the housing (16) of the cooling energy consumer (14) and the compartment (12) based on the assumption that an unintended leackage of the compartment (12) leads to a volume flow of 2 to 20 I/s of ambient air from outside the compartment (12) to enter the compartment (12).

4. Arrangement according to Claim 2 or 3,
**characterized in that** the control unit (36) is adapted to control a volume flow, a speed and/or a direction of flow of cooling air supplied to the compartment (12) such that the cooling air is substantially evenly mixed with the air prevailing in the compartment (12) and/or leakage air entering the compartment (12) via an unintended leackage of the compartment (12).

5. Arrangement according to any one of Claims 1 to 4,
**characterized in that** the cooling energy consumer housing (16) and the compartment (12) are supplied with cooling air from a common cooling air source.

6. Arrangement according to Claim 5,
**characterized in that** the cooling air inlet (32) for supplying cooling air to the compartment (12) is provided in a cooling air supply manifold (26) which is connected to the cooling fluid inlet (18) of the cooling energy consumer housing (16).

7. Arrangement according to Claim 5 or 6,
**characterized in that** the cooling air outlet (34) for discharging cooling air from the compartment (12) is provided in a cooling air discharge manifold (30) which is connected to the cooling fluid outlet (20) of the cooling energy consumer housing (16).

8. Method of operating a cooling arrangement (10) suitable for use in an aircraft, the method comprising the steps:
- supplying a cooling fluid to a housing of a cooling energy consumer (14) via a cooling fluid inlet (18) of the housing (16),
- discharging the cooling fluid from the housing (16) of the cooling energy consumer (14) via a cooling fluid outlet (20) of the housing (16),
**characterized in that** cooling air is supplied to a compartment (12) receiving the cooling energy consumer (14) via a cooling air inlet (32) of the compartment (12) and **in that** cooling air is discharged from the compartment (12) via a cooling air outlet (34) of the compartment (12).

9. Method according to Claim 8,
**characterized in that** a control unit (36) controls the supply of cooling energy to the housing (16) of the cooling energy consumer (14) and the compartment (12) such that, in the event of an unintended leackage of the compartment (12), the dew point temperature of the air within the compartment (12) is maintained below the surface temperature within the compartment (12).

10. Method according to Claim 9,
**characterised in that** the control unit (36) controls the supply of cooling energy to the housing (16) of the cooling energy consumer (14) and the compartment (12) based on the assumption that an unintended leackage of the compartment (12) leads to a volume flow of 2 to 20 I/s of ambient air from outside the compartment (12) to enter the compartment (12).

11. Method according to Claim 9 or 10,
**characterized in that** the control unit (36) controls a volume flow, a speed and/or a direction of flow of cooling air supplied to the compartment (12) such that the cooling air is substantially evenly mixed with the air prevailing in the compartment (12) and/or leakage air entering the compartment (12) via an unintended leackage of the compartment (12).

12. Method according to any one of Claims 8 to 11,
**characterized in that** the cooling energy consumer housing (16) and the compartment (12) are supplied with cooling air from a common cooling air source.

13. Method according to Claim 12,
**characterized in that** the cooling air inlet (32) for supplying cooling air to the compartment (12) is provided in a cooling air supply manifold (26) which is connected to the cooling fluid inlet (18) of the cooling energy consumer housing (16).

14. Method according to Claim 12 or 13,
**characterized in that** the cooling air outlet (34) for discharging cooling air from the compartment (12) is provided in a cooling air discharge manifold (30) which is connected to the cooling fluid outlet (20) of the cooling energy consumer housing (16).

15. Use of an arrangement according to any one of Claims 1 to 7 and/or a method according to any one of Claims 8 to 14 on board an aircraft, in particular for cooling food.

## Patentansprüche

1. Kühlanordnung (10), die zur Verwendung in einem Flugzeug geeignet ist, wobei die Kühlanordnung (10) umfasst:
- einen Kühlenergieverbraucher (14), der ein Gehäuse (16) hat, welches mit einem Kühlfluideinlass (18) zum Zuführen eines Kühlfluids zu dem Gehäuse (16) und einem Kühlfluidauslass (20) zum Abführen des Kühlfluids aus dem Gehäuse (16) versehen ist, wobei der Kühlenergieverbraucher (14) in einem Fach (12) aufgenommen ist,
**dadurch gekennzeichnet, dass** das Fach (12) mit einem Kühllufteinlass (32) zum Zuführen von Kühlluft zu dem Fach (12) und einem Kühlluftauslass (34) zum Abführen der Kühlluft aus dem Fach (12) versehen ist.

2. Anordnung gemäß Anspruch 1,
**gekennzeichnet durch** eine Steuereinheit (36), die dazu eingerichtet ist, die Zufuhr von Kühlenergie zu dem Gehäuse (16) des Kühlenergieverbrauchers (14) und dem Fach (12) so zu steuern, dass in dem Fall einer unbeabsichtigten Leckage des Fachs (12) die Taupunkttemperatur der Luft innerhalb des Fachs (12) unterhalb der Oberflächentemperatur innerhalb des Fachs (12) gehalten wird.

3. Anordnung gemäß Anspruch 2,
**dadurch gekennzeichnet, dass** die Steuereinheit (36) dazu eingerichtet ist, die Zufuhr von Kühlenergie zu dem Gehäuse (16) des Kühlenergieverbrauchers (14) und dem Fach (12) basierend auf der Annahme zu steuern, dass eine unbeabsichtigte Leckage des Fachs (12) dazu führt, dass ein Volumenstrom von 2 bis 20 l/s Umgebungsluft von außerhalb des Fachs (12) in das Fach (12) eindringt.

4. Anordnung gemäß Anspruch 2 oder 3,
**dadurch gekennzeichnet, dass** die Steuereinheit (36) dazu eingerichtet ist, einen Volumenstrom, einen Geschwindigkeit und/oder eine Richtung des Stroms der dem Fach (12) zugeführten Kühlluft so zu steuern, dass die Kühlluft im Wesentlichen gleichmäßig mit der in dem Fach (12) vorhandenen Luft und/oder Leckageluft gemischt wird, die über eine unbeabsichtigte Leckage des Fachs (12) in das Fach (12) eindringt.

5. Anordnung gemäß einem der Ansprüche 1 bis 4,
**dadurch gekennzeichnet, dass** dem Kühlenergieverbrauchergehäuse (16) und dem Fach (12) Kühlluft von einer gemeinsamen Kühlluftquelle zugeführt wird.

6. Anordnung gemäß Anspruch 5,
**dadurch gekennzeichnet, dass** der Kühllufteinlass (32) zum Zuführen von Kühlluft zu dem Fach (12) in einem Kühlluftzufuhr-Sammelkanal (26) vorgesehen ist, der mit dem Kühlfluideinlass (18) des Kühlenergieverbrauchergehäuses (16) verbunden ist.

7. Anordnung gemäß Anspruch 5 oder 6,
**dadurch gekennzeichnet, dass** der Kühlluftauslass (34) zum Abführen von Kühlluft von dem Fach (12) in einem Kühlluftabfuhr-Sammelkanal (30) vorgesehen ist, der mit dem Kühlfluidauslass (20) des Kühlenergieverbrauchergehäuses (16) verbunden ist.

8. Verfahren zum Betreiben einer Kühlanordnung (10), die zur Verwendung in einem Flugzeug geeignet ist, wobei das Verfahren die Schritte umfasst:
- Zuführen eines Kühlfluids zu einem Gehäuse eines Kühlenergieverbrauchers (14) durch einen Kühlfluideinlass (18) des Gehäuses (16),
- Abführen des Kühlfluids von dem Gehäuse (16) des Kühlenergieverbrauchers (14) durch einen Kühlfluidauslass (20) des Gehäuses (16),
**dadurch gekennzeichnet, dass** Kühlluft einem Fach (12), das den Kühlenergieverbraucher (14) aufnimmt, durch einen Kühllufteinlass (32) des Fachs (12) zugeführt wird, und dass Kühlluft aus dem Fach (12) durch einen Kühlluftauslass (34) des Fachs (12) abgeführt wird.

9. Verfahren gemäß Anspruch 8,
**dadurch gekennzeichnet, dass** eine Steuereinheit (36) die Zufuhr von Kühlenergie zu dem Gehäuse (16) des Kühlenergieverbrauchers (14) und dem Fach (12) so steuert, dass in dem Fall einer unbeabsichtigten Leckage des Fachs (12) die Taupunkttemperatur der Luft innerhalb des Fachs (12) unterhalb der Oberflächentemperatur innerhalb des Fachs (12) gehalten wird.

10. Verfahren gemäß Anspruch 9,
**dadurch gekennzeichnet, dass** die Steuereinheit (36) die Zufuhr von Kühlenergie zu dem Gehäuse (16) des Kühlenergieverbrauchers (14) und dem Fach (12) basierend auf der Annahme steuert, dass eine unbeabsichtigte Leckage des Fachs (12) dazu führt, dass ein Volumenstrom von 2 bis 20 l/s Umgebungsluft von außerhalb des Fachs (12) in das Fach (12) eindringt.

11. Verfahren gemäß Anspruch 9 oder 10,
**dadurch gekennzeichnet, dass** die Steuereinheit (36), einen Volumenstrom, einen Geschwindigkeit und/oder eine Richtung des Stroms der dem Fach (12) zugeführten Kühlluft so steuert, dass die Kühlluft im Wesentlichen gleichmäßig mit der in dem Fach (12) vorhandenen Luft und/oder Leckageluft gemischt wird, die über eine unbeabsichtigte Leckage des Fachs (12) in das Fach (12) eindringt.

12. Verfahren gemäß einem der Ansprüche 8 bis 11,
**dadurch gekennzeichnet, dass** dem Kühlenergieverbrauchergehäuse (16) und dem Fach (12) Kühlluft von einer gemeinsamen Kühlluftquelle zugeführt wird.

13. Verfahren gemäß Anspruch 12,
**dadurch gekennzeichnet, dass** der Kühllufteinlass (32) zum Zuführen von Kühlluft zu dem Fach (12) in einem Kühlluftzufuhr-Sammelkanal (26) vorgesehen ist, der mit dem Kühlfluideinlass (18) des Kühlenergieverbrauchergehäuses (16) verbunden ist.

14. Verfahren gemäß Anspruch 12 oder 13,
**dadurch gekennzeichnet, dass** der Kühlluftauslass (34) zum Abführen von Kühlluft von dem Fach (12) in einem Kühlluftabfuhr-Sammelkanal (30) vorgesehen ist, der mit dem Kühlfluidauslass (20) des Kühlenergieverbrauchergehäuses (16) verbunden ist.

15. Verwendung einer Anordnung gemäß einem der Ansprüche 1 bis 7 und/der eines Verfahrens gemäß einem der Ansprüche 8 bis 14 an Bord eines Flugzeugs, insbesondere zum Kühlen von Nahrungsmitteln.

## Revendications

1. Agencement de refroidissement (10) approprié pour utilisation dans un aéronef, l'agencement de refroidissement (10) comprenant:
- un consommateur (14) d'énergie de refroidissement comportant un logement (16) qui est muni d'un orifice d'entrée (18) de fluide de refroidissement destiné à délivrer un fluide de refroidissement vers le logement (16) et d'un orifice de sortie (20) de fluide de refroidissement destiné à évacuer le fluide de refroidissement du logement (16), le consommateur (14) d'énergie de refroidissement étant reçu à l'intérieur d'un compartiment (12),
**caractérisé en ce que** le compartiment (12) est muni d'un orifice d'entrée (32) d'air de refroidissement destiné à délivrer de l'air de refroidissement dans le compartiment (12) et d'un orifice de sortie (34) d'air de refroidissement destiné à évacuer l'air de refroidissement du compartiment (12).

2. Agencement selon la revendication 1,
**caractérisé par** une unité de commande (36) qui est adaptée pour commander l'alimentation en énergie de refroidissement vers le logement (16) du consommateur (14) d'énergie de refroidissement et le compartiment (12) d'une manière telle que, dans l'éventualité d'une fuite accidentelle du compartiment (12), la température du point de rosée de l'air à l'intérieur du compartiment (12) est maintenue au-dessous de la température de surface à l'intérieur du compartiment (12).

3. Agencement selon la revendication 2,
**caractérisé en ce que** l'unité de commande (36) est adaptée pour commander l'alimentation en énergie de refroidissement vers le logement (16) du consommateur (14) d'énergie de refroidissement et le compartiment (12) sur la base de la supposition qu'une fuite accidentelle du compartiment (12) mène à l'entrée d'un débit volumétrique de 2 à 20 l/s d'air ambiant depuis l'extérieur du compartiment (12) dans le compartiment (12).

4. Agencement selon la revendication 2 ou 3,
**caractérisé en ce que** l'unité de commande (36) est adaptée pour commander un débit volumétrique, une vitesse et/ou une direction d'écoulement de l'air de refroidissement délivré par le compartiment (12) d'une manière telle que l'air de refroidissement est mélangé sensiblement uniformément avec l'air prévalant dans le compartiment (12) et/ou une fuite d'air entrant dans le compartiment (12) via une fuite accidentelle du compartiment (12).

5. Agencement selon l'une quelconque des revendications 1 à 4,
**caractérisé en ce que** le logement (16) du consommateur d'énergie de refroidissement et le compartiment (12) sont alimentés en air de refroidissement provenant d'une source d'air de refroidissement commune.

6. Agencement selon la revendication 5,
**caractérisé en ce que** l'orifice d'entrée (32) d'air de refroidissement destiné à délivrer de l'air de refroidissement vers le compartiment (12) est prévu dans un collecteur (26) d'alimentation en air de refroidissement qui est connecté à l'orifice d'entrée (18) de fluide de refroidissement du logement (16) du consommateur d'énergie de refroidissement.

7. Agencement selon la revendication 5 ou 6,
**caractérisé en ce que** l'orifice de sortie (34) d'air de refroidissement destiné à évacuer l'air de refroidissement du compartiment (12) est prévu dans un collecteur (30) d'évacuation d'air de refroidissement qui est connecté à l'orifice de sortie (20) de fluide de refroidissement du logement (16) du consommateur d'énergie de refroidissement.

8. Procédé de fonctionnement d'un agencement de refroidissement (10) approprié pour utilisation dans un aéronef, le procédé comprenant les étapes consistant à :
- délivrer un fluide de refroidissement vers un logement d'un consommateur (14) d'énergie de refroidissement via un orifice d'entrée (18) de fluide de refroidissement du logement (16),
- évacuer le fluide de refroidissement du logement (16) du consommateur (14) d'énergie de refroidissement via un orifice de sortie (20) de fluide de refroidissement du logement (16),
**caractérisé en ce que** l'air de refroidissement est délivré vers un compartiment (12) recevant le consommateur (14) d'énergie de refroidissement via un orifice d'entrée (32) d'air de refroidissement du compartiment (12) et **en ce que** l'air de refroidissement est évacué du compartiment (12) via un orifice de sortie (34) d'air de refroidissement du compartiment (12).

9. Procédé selon la revendication 8,
**caractérisé en ce qu'**une unité de commande (36) commande l'alimentation en énergie de refroidissement vers le logement (16) du consommateur (14) d'énergie de refroidissement et le compartiment (12) d'une manière telle que, dans l'éventualité d'une fuite accidentelle du compartiment (12), la température du point de rosée de l'air à l'intérieur du compartiment (12) est maintenue au-dessous de la température de surface à l'intérieur du compartiment (12).

10. Procédé selon la revendication 9,
**caractérisé en ce que** l'unité de commande (36) commande l'alimentation en énergie de refroidissement vers le logement (16) du consommateur (14) d'énergie de refroidissement et le compartiment (12) sur la base de la supposition qu'une fuite accidentelle du compartiment (12) mène à l'entrée d'un débit volumétrique de 2 à 20 l/s d'air ambiant depuis l'extérieur du compartiment (12) dans le compartiment (12).

11. Procédé selon la revendication 9 ou 10,
**caractérisé en ce que** l'unité de commande (36) commande un débit volumétrique, une vitesse et/ou une direction d'écoulement de l'air de refroidissement délivré vers le compartiment (12) d'une manière telle que l'air de refroidissement est mélangé sensiblement uniformément avec l'air prévalant dans le compartiment (12) et/ou une fuite d'air entrant dans le compartiment (12) via une fuite accidentelle du compartiment (12).

12. Procédé selon l'une quelconque des revendications 8 à 11,
**caractérisé en ce que** le logement (16) du consommateur d'énergie de refroidissement et le compartiment (12) sont alimentés en air de refroidissement provenant d'une source d'air de refroidissement commune.

13. Procédé selon la revendication 12,
**caractérisé en ce que** l'orifice d'entrée (32) d'air de refroidissement destiné à délivrer l'air de refroidissement vers le compartiment (12) est prévu dans un collecteur (26) d'alimentation en air de refroidissement qui est connecté à l'orifice d'entrée (18) de fluide de refroidissement du logement (16) du consommateur d'énergie de refroidissement.

14. Procédé selon la revendication 12 ou 13,
**caractérisé en ce que** l'orifice de sortie (34) d'air de refroidissement destiné à évacuer l'air de refroidissement du compartiment (12) est prévu dans un collecteur (30) d'évacuation d'air de refroidissement qui est connecté à l'orifice de sortie (20) de fluide de refroidissement du logement (16) du consommateur d'énergie de refroidissement.

15. Utilisation d'un agencement selon l'une quelconque des revendications 1 à 7 et/ou procédé selon l'une quelconque des revendications 8 à 14 embarqué dans un aéronef, en particulier pour le refroidissement de la nourriture.
